# EUROPÄISCHE PATENTSCHRIFT

(11) **EP 1 282 796 B1**
(45) Veröffentlichungstag und Bekanntmachung des Hinweises auf die Patenterteilung: **31.08.2005**
(21) Anmeldenummer: 01943266.5
(22) Anmeldetag: 19.04.2001
(51) Int. Cl.: F16K 17/16

(54) **BERSTSCHUTZEINRICHTUNG**
ANTI-RUPTURE DEVICE
DISPOSITIF ANTI-ECLATEMENT

(30) Priorität: 18.05.2000 DE 10024539
(43) Veröffentlichungstag der Anmeldung: 12.02.2003
(73) Patentinhaber: Zimmer Aktiengesellschaft, 60388 Frankfurt am Main (DE)
(72) Erfinder: ZIKELI, Stefan, A-4844 Regau (AT); ECKER, Friedrich, A-4850 Timelkam (AT)
(74) Vertreter: Grünecker, Kinkeldey, Stockmair & Schwanhäusser Anwaltssozietät
(86) Internationale Anmeldenummer: PCT/EP2001/004466
(87) Internationale Veröffentlichungsnummer: WO 2001/088419

(56) Entgegenhaltungen:
- WO-A-94/08162
- FR-E- 75 191

## Beschreibung

Die Erfindung betrifft eine Berstschutzeinrichtung für ein Fluidleitungsstück zur Durchleitung eines spontan exotherm reagierenden Arbeitsfluids wie eines synthetischen Polymers oder einer Polymerlösung, eines Cellulosederivats oder einer Lösung aus Cellulose, Wasser und Aminoxid sowie Mischungen davon, wobei das Fluidleitungsstück einen vom Arbeitsfluid durchströmten Arbeitsfluidleitungsbereich und die Berstschutzeinrichtung ein Druckausgleichsvolumen aufweist, das bei Überschreiten eines vorbestimmten Berstdruckes im Arbeitsfluid von einem Normalbetriebszustand, in dem das Druckausgleichsvolumen vom Arbeitsfluidleitungsbereich abgetrennt ist, in einem Berstzustand, in dem das Druckausgleichsvolumen mit dem Arbeitsfluidleitungsbereich verbunden ist, überführbar ist, wobei die Berstschutzeinrichtung mindestens einen Befestigungskörper aufweist, durch das Druckausgleichsvolumen zumindest abschnittsweise innerhalb des Arbeitsfluidleitungsbereichs und vom Arbeitsfluid zumindest abschnittsweise umströmt gehalten ist, und wobei das Druckausgleichsvolumen mit der Außenumgebung des Fluidleitungsstückes verbunden ist.

Die mit einer derartigen Berstschutzeinrichtung ausgestatteten Fluidleitungsstücke sind beispielsweise einfache Rohrleitungen und werden herkömmlicherweise bei Spinnanlagen, bei denen das Arbeitsfluid als Formmasse zu Formkörpern verarbeitet wird, eingesetzt. Durch das Fluidleitungsstück wird das Arbeitsfluid von einem Reaktionsbehälter, in dem es zusammengemischt wird, im Regelfall zu einer Spinndüse transportiert, an der es versponnen wird.

Die dabei verwendeten Arbeitsfluide sind wärmesensitiv und neigen zu einer spontanen exothermen Reaktion, wenn im Fluidleitungsstück eine bestimmte Höchsttemperatur überschritten wird, oder auch unterhalb dieser Höchsttemperatur, wenn das Arbeitsfluid zu lange gelagert wird.

Als ein besonders zum Verspinnen geeignetes Arbeitsfluid dient eine Formmasse, die eine Spinnlösung, enthaltend Cellulose, Wasser und ein tertiäres Aminoxid, beispielsweise N-Methylmorpholin N-Oxid (NMMO) sowie Stabilisatoren zur thermischen Stabilisierung der Cellulose und des Lösungsmittels sowie gegebenenfalls weitere Additive, wie z. B. Titandioxid, Bariumsulfat, Grafit, Carboxymethylcellulosen, Polyethylenglykole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Russe oder elektrisch leitfähige Russe, Kieselsäure, organische Lösungsmittel als Verdünnungsmittel, etc. umfasst.

Bei einer spontanen exothermen Reaktion im Arbeitsfluid entsteht ein hoher Reaktionsdruck. Durch den sich im Arbeitsfluid ausbreitenden Reaktionsdruck können die vom Arbeitsfluid durchströmten technischen Geräte der Spinnanlagen, beispielsweise eine Pumpe, Fluidleitungsstücke, Wärmetauscher oder ein Druckausgleichsbehälter beschädigt werden.

Für den Fall einer spontanen exothermen Reaktion ist es daher im Stand der Technik bekannt, für Fluidleitungsstücke Berstschutzeinrichtungen vorzusehen, deren Aufgabe es ist, den Reaktionsdruck möglichst schnell abzubauen und so weitere Beschädigungen durch den Reaktionsdruck an teureren Geräten zu vermeiden.

Bei herkömmlichen Fluidleitungsstücken, wie in der EP 0 626 198 A1, WO 94/08162, WO 99/00185 ist die Berstschutzeinrichtung mit einem Druckausgleichsvolumen versehen, das im normalen Betrieb vom Arbeitsfluid im Arbeitsfluidleitungsbereich abgetrennt ist. Wird ein vorbestimmter Berstdruck überschritten, so nimmt die Berstschutzeinrichtung einen Berstzustand ein, in dem das Druckausgleichsvolumen mit dem Arbeitsfluidleitungsbereich verbunden ist. Durch das im Berstfall nun zusätzlich zur Verfügung stehende Volumen kann der Reaktionsdruck im Leitungssystem abgebaut werden.

Üblicherweise sind die Bersteinrichtungen mit dem Druckausgleichsvolumen an einer Mantelfläche des Arbeitsfluidleitungsbereichs angeordnet.

Der Nachteil dieser herkömmlichen außen liegenden Berstschutzeinrichtungen liegt darin, dass sie zu großen Bauvolumina bei den Fluidleitungsstücken führen. Die so ausgerüsteten Fluidleitungsstücke benötigen daher viel Einbauraum und verursachen unerwünschte Totwassergebiete im Arbeitsfluid. Außerdem sind bei herkömmlichen Bersteinrichtungen aufwändige Veränderungen an den kommerziell verfügbaren Rohrsystemen, aus denen im Regelfall die Fluidleitungsstücke aufgebaut sind, nötig. Dadurch sind die Herstellkosten von Fluidleitungsstücken mit Berstschutzeinrichtungen zur Verwendung bei spontan exotherm reagierenden Arbeitsfluiden hoch.

In der EP 789 822 B1 und in der EP 662 204 B1 sind Berstschutzeinrichtungen beschrieben, die in speziell angepasste, aufwändig zu fertigende Fluidleitungsstücke eingesetzt werden. Im nächstliegenden Stand der Technik, der EP 789 822 B1, ist die Sollbruchstelle der Berstschutzeinrichtung nicht Teil der Innenwand der Rohrleitung, sondern im Inneren der Rohrleitung angeordnet. Bei der Vorrichtung der EP 662 204 B1 ist die Sollbruchstelle Teil der Innenwand der Rohrleitung.

Angesichts dieser Nachteile liegt der Erfindung die Aufgabe zu Grunde, die bestehenden Berstschutzeinrichtungen für Fluidleitungsstücke so zu verbessern, dass kleine Bauvolumina möglich sind und die Herstellkosten der Leitungssysteme und der sich daran anschließenden Hilfssysteme gesenkt werden können.

Diese Aufgabe wird für eine Berstschutzeinrichtung der eingangs genannten Art dadurch gelöst, dass der Befestigungskörper zwischen zwei Fluidleitungsstücke anbringbar ausgestaltet ist.

Durch das zumindest abschnittsweise innerhalb des Arbeitsfluidleitungsbereichs angeordnete, vom Arbeitsfluid zumindest abschnittsweise umströmte Druckausgleichsvolumen kann gegenüber den herkömmlichen Berstschutzeinrichtungen Platz gespart werden, da das Druckausgleichsvolumen innerhalb des Querschnitts des Fluidleitungsstücks angeordnet ist. Mit dieser einfachen Maßnahme werden neben der Reduktion der Herstellkosten auch keine Totwassergebiete erzeugt, da nunmehr einfache Rohrleitungen für den Außenbereich des Arbeitsfluidleitungsbereichs verwendet werden können, die nicht weiter bearbeitet werden müssten.

In einer besonders vorteilhaften Ausgestaltung kann das Druckausgleichsvolumen mit der Außenseite des Fluidleitungsstücks verbunden sein, wobei zumindest eine vom Druckausgleichsvolumen zur Außenseite des Fluidleitungsstücks geführte Druckentlastungsleitung vorgesehen ist. In dieser Ausgestaltung kann das Druckausgleichsvolumen mit externen Vorrichtungen und Gerätschaften verbunden werden, die an die Druckentlastungsleitung angeschlossen werden. Diese externen Vorrichtungen können beispielsweise Druck- und Temperaturmesseinrichtungen sein, oder Abflusssysteme, durch die das im Berstzustand unter dem Einfluss des Reaktionsdruckes in das Druckausgleichsvolumen eintretende und durch die Druckentlastungsleitung austretende Arbeitsfluid abgeleitet werden kann.

Das Druckausgleichsvolumen kann vorteilhaft von einem im wesentlichen rohrförmigen Innenkörper gebildet sein. Bei dieser Ausgestaltung können handelsübliche Bauteile ohne aufwändige Nachbearbeitung verwendet werden.

Um das Druckausgleichsvolumen möglichst allseitig dem Druck innerhalb des Arbeitsfluids auszusetzen, kann in einer weiteren vorteilhaften Ausgestaltung das Druckausgieichsvolumen oder der das Druckausgleichsvolumen bildende Innenkörper über Abstandhalter beabstandet von einer Außenwandung des Arbeitsfluidleitungsbereichs gehalten sein. In dieser Ausgestaltung bildet sich ein im wesentlichen ringförmiger Querschnitt des Arbeitsfluidleitungsbereichs aus. Dadurch wird eine besonders günstige Basis für die weitere Beeinflussung und Steuerung der Strömung des Arbeitsfluids durch das Fluidleitungsstück geschaffen.

Auf eine separate Druckentlastungsleitung kann verzichtet werden, wenn in einer weiteren vorteilhaften Ausgestaltung die Druckentlastungsleitung in einem Abstandhalter angeordnet ist. Mit dieser Doppelfunktion kann ein negativer Einfluss auf die Durchströmung des Arbeitsfluidleitungsbereichs vermieden werden.

Der Einfluss der Abstandhalter auf die Strömung des Arbeitsfluids kann nochmals verringert werden, wenn in einer vorteilhaften Weiterbildung der Abstandhalter einen im wesentlichen stromlinienförmigen Querschnitt aufweist.

Der Herstellprozess des erfindungsgemäßen Fluidleitungsstücks kann rationalisiert werden, wenn in einer weiteren vorteilhaften Ausgestaltung der Abstandhalter am Befestigungskörper ausgebildet ist. Dadurch kann allein durch Verwendung verschiedener, standardisierter Befestigungskörper die Berstschutzeinrichtung in eine Vielzahl von Fluidleitungsstücken mit verschiedenen Durchmessergrößen von Fluidleitungsstücken eingebaut werden, ohne dass die gesamte Berstschutzeinrichtung für die jeweils unterschiedlichen Durchmesser der Fluidleitungsstücke verändert werden muss. Die Anpassung findet allein durch Auswahl des geeigneten Befestigungskörpers statt. Der Befestigungskörper kann insbesondere stern- oder speichenradförmig ausgebildet sein.

Um eine symmetrische Umströmung des Druckentlastungsvolumens zu ermöglichen, kann dieses in der Mitte des Arbeitsfluidleitungsbereichs an Stelle der Kernströmung des Arbeitsfluids angeordnet sein. Durch die symmetrische Umströmung wird eine gleichmäßige Geschwindigkeitsverteilung im Arbeitsfluid erreicht. Bei einer unsymmetrischen Geschwindigkeitsverteilung bestünde Gefahr, dass sich in der Strömung des Arbeitsfluids Stagnationsbereiche ausbilden, in denen das Arbeitsfluid altert. Dies würde die Gefahr spontaner exothermer Reaktionen erhöhen.

Die Berstschutzeinrichtung kann in einer vorteilhaften Weiterbildung zumindest einen, dem Druck im Arbeitsfluidleitungsbereich ausgesetzten, an das Druckausgleichsvolumen angrenzenden Sollbruchabschnitt aufweisen, dessen Festigkeit im Vergleich zur Umgebung verringert ist. Der Sollbruchabschnitt bildet eine kontrollierte Schwachstelle, die bei Überschreiten des Berstdruckes im Arbeitsfluid einreißt oder bricht und den Reaktionsdruck zum Druckausgleichsvolumen abführt.

Der Sollbruchabschnitt kann einstückig in eine Umwandung des Druckausgleichvolumens integriert sein oder an einem separaten Berstkörper an der Berstschutzeinrichtung lösbar angebracht sein. In letzterem Fall kann im Berstzustand sich der Berstkörper verformen oder aber aus seiner Befestigung gelöst werden. Der Berstkörper kann insbesondere als eine Berstscheibe ausgebildet sein, durch die im Normalbetriebszustand eine Endfläche des rohrförmigen Körpers verschlossen ist. Die Berstscheibe kann Kreisform aufweisen. Die lösbare Verbindung des Berstkörpers erlaubt einen Austausch des Berstkörpers, wenn der Berstzustand eingetreten ist. Eine weitere erfindungsgemäße Ausführung stellt die Anbringung des Sollbruchabschnitts am Mantel des rohrförmigen Körpers der Berstschutzeinrichtung dar. In diesem Falle ist der Sollbruchabschnitt nicht kreisförmig ausgeführt, sondem stellt eine rechteckige oder ovale Form vorzugsweise axial, parallel zur Mittelachse dar.

Um Strömungsverluste zu minimieren und Stagnationsgebiete zu vermeiden, kann der Berstkörper eine im wesentlichen stromlinienförmige Außenform aufweisen.

In einer weiteren besonders vorteilhaften Ausgestaltung kann die Berstschutzeinrichtung gleichzeitig als eine Innentemperiervorrichtung dienen, deren Temperatur zumindest abschnittsweise im vom Arbeitsfluid umströmten Bereich zur Steuerung der Temperatur des Arbeitsfluids steuerbar ist. Durch diese Doppelfunktion kann durch die Berstschutzeinrichtung eine Beeinflussung der Temperatur des Arbeitsfluids von innerhalb des ringförmigen Arbeitsfluidleitungsbereichs erfolgen. Im Vergleich zu einer Beheizung von der Außenwand des Arbeitsfluidleitungsbereichs her verringert sich aufgrund des zumindest angenähert ringförmigen Strömungsquerschnittes die Dicke der zu temperierenden Arbeitsfluidschicht.

Bei einer herkömmlichen Rohrleitung ohne Einbauten ist diese Dicke gleich dem Durchmesser, bei einer ringförmigen Ausgestaltung des Arbeitsfluidleitungsbereichs ist diese Schichtdicke drastisch reduziert, da die Ringdicke die maßgebliche Größe für die zu temperierende Arbeitsfluidschicht darstellt. Die verringerte Schichtdicke ermöglicht einen schnelleren Wärmetransport und erlaubt eine genauere Kontrolle der Temperatur innerhalb des Arbeitsfluids.

Eine besonders gute Synergiewirkung lässt sich bei gleichzeitiger Nutzung des Druckausgleichsvolumens zur Aufnahme eines Temperierungsfluids erreichen. Die Temperatur des Temperierungsfluids ist vorteilhaft durch eine Steuereinrichtung steuerbar, so dass die Temperatur im Arbeitsfluid über das Temperierungsfluid einstellbar ist. Ein Temperierungsfluid hat gegenüber beispielsweise elektrischen Temperiersystemen den Vorteil, dass keine lokal stark unterschiedlichen Temperaturverteilungen auftreten, sondem ein gleichmäßiger Wärmetausch zwischen Temperierfluid und Arbeitsfluid möglich ist.

Das Temperierfluid kann sowohl zum Beheizen als auch zum Kühlen des Arbeitsfluids verwendet werden, je nachdem ob seine Temperatur höher oder niedriger als die Temperatur des Arbeitsfluids ist. Das Temperierungsfluid kann flüssig oder gasförmig sein.

Bei Verwendung der Berstschutzeinrichtung als Innentemperierungseinrichtung und bei Verwendung eines Temperierungsfluids kann die Druckentlastungsleitung in einer weiteren vorteilhaften Ausgestaltung in einer Doppelfunktion als Speiseleitung zur Zufuhr des Temperierungsfluids dienen.

Um die Fläche, über welche der Wärmetausch zur Steuerung der Temperatur des Arbeitsfluids gesteuert wird, zu erhöhen, kann das Fluidleitungsstück in einer weiteren vorteilhaften Ausgestaltung eine Manteltemperierungseinrichtung aufweisen, die den Arbeitsfluidleitungsbereich zumindest abschnittsweise umgibt, und dessen Temperatur durch eine Steuereinrichtung steuerbar ist.

Auch eine Manteltemperierungseinrichtung kann vorteilhaft einen von einem Temperierungsfluid durchströmten Hohlraum ausbilden . Die Temperatur des Temperierungsfluids kann sich von der Temperatur des Arbeitsfluids unterscheiden. Wie oben bereits erwähnt wurde, liegt der Vorteil in der Verwendung eines Temperierungsfluids in einer gleichmäßigen Temperaturverteilung und Wärmeübertragung ohne lokale Temperaturspitzen.

Um das Arbeitsfluid gegenüber äußeren Einflüssen zu isolieren, kann in einer weiteren vorteilhaften Ausgestaltung der Arbeitsfluidleitungsbereich zumindest abschnittsweise von einer Wärmeisolationsschicht umhüllt sein.

Hinsichtlich der Stabilität und der Fertigung des Fluidleitungsstückes kann es besonders günstig sein, wenn der Abstandhalter an einem in Durchleitungsrichtung des Arbeitsfluids gelegenen Ende des Fluidleitungsstücks angeordnet ist.

In den oben beschriebenen Ausgestaltungen kann das Fluidleitungsstück jedwede, in der Leitungstechnik gebräuchliche Funktionsform annehmen.

So kann das erfindungsgemäße Fluidleitungsstück als gerades oder beliebig gekrümmtes Rohrleitungsstück, als Verteilerstück zum Anschluss weiterer Fluidleitungsstücke in Y-Form, in T-Form oder in einer anderen, beliebig dreidimensionalen Form, als Endstück mit nur einem Verbindungsabschnitt zum Anschluss nur eines weiteren Fluidleitungsstücks oder als Reduzierstück, dessen einer, vom Arbeitsfluid durchströmter Strömungsquerschnitt an einem in Durchleitungsrichtung des Arbeitsfluid gelegenem Ende kleiner ist als am im Durchleitungsrichtung entgegengesetzten Ende, ausgestaltet sein. Ein solches Reduzierstück kann verwendet werden, um Übergänge zwischen verschiedenen Fluidleitungsstücken zu schaffen. Auch eine Pumpe zur Förderung des Arbeitsfluids sowie ein oder mehrere Filter, Wärmetauscher oder Mischreaktoren können im Fluidleitungsstück vorgesehen sein.

Als Werkstoff für die Berstschutzeinrichtung, den Arbeitsfluidleitungsbereich oder den Temperierungsmantelabschnitt kann jeglicher, mit Bezug auf das Arbeitsfluid korrosionsbeständiger und hinsichtlich der möglichen exothermen Reaktionen druckbeständiger Werkstoff verwendet werden. Ein möglicher Werkstoff ist dabei Stahl, Edelstahl oder verchromter Stahl. Um die Haftung und Reibung des Arbeitsfluids an den Wandungen zu minimieren, können die Außenwandung der Temperierungsvorrichtung oder die Innenwandung des Arbeitsfluidsleitungsbereichs besonders glatt bearbeitet oder mit einer reibungsminimierenden Beschichtung versehen sein.

Die Erfindung erstreckt sich auch auf ein mit der oben beschriebenen Berstschutz-einrichtung ausgestattete Fluidleitungsstücke.

Außerdem betrifft die Erfindung ein modulares Fluidleitungssystem aus Fluidleitungsstücken, von denen zumindest eines eine erfindungsgemäße Berstschutzeinrichtung aufweist. Zum Aufbau des Fluidleitungssystems werden die Fluidleitungsstücke hintereinander geschaltet. Dabei können sich jeweils ein Fluidleitungsstück mit einer Innentemperierungseinrichtung und ein Fluidleitungsstück mit einer Berstschutzeinrichtung abwechseln.

Die Erfindung betrifft auch eine Anlage zur Verarbeitung von Polymerlösungen, umfassend ein modular aufgebautes Fluidleitungssystem mit Fluidleitungsstücken, die zumindest teilweise mit Temperiereinrichtungen sowie eingebauten Apparaten und Armaturen wie Pumpen, Filter, Wärmetauscher, Mischreaktoren, Kugelhähnen etc. versehen sind, und mit Fluidleitungsstücken mit Berstschutzeinrichtungen, die in regelmäßigen Abständen angeordnet sind.

Im Folgenden wird die Erfindung anhand von Ausführungsbeispielen mit Bezug auf die Figuren beschrieben.

Es zeigen:
- Fig. 1: ein erstes Ausführungsbeispiel einer erfindungsgemäßen Berstschutzeinrichtung in einem Längsschnitt;
- Fig. 2: ein zweites Ausführungsbeispiel einer erfindungsgemäßen Berstschutzeinrichtung in einem Längsschnitt;
- Fig. 3: ein drittes Ausführungsbeispiel einer erfindungsgemäßen Berstschutzeinrichtung in einem Längsschnitt;
- Fig.4: ein viertes Ausführungsbeispiel einer erfindungsgemäßen Berstschutzeinrichtung in einem Längsschnitt;
- Fig. 5: das Ausführungsbeispiel der Fig. 4 in einem Schnitt entlang der Linie A-A der Fig. 4.

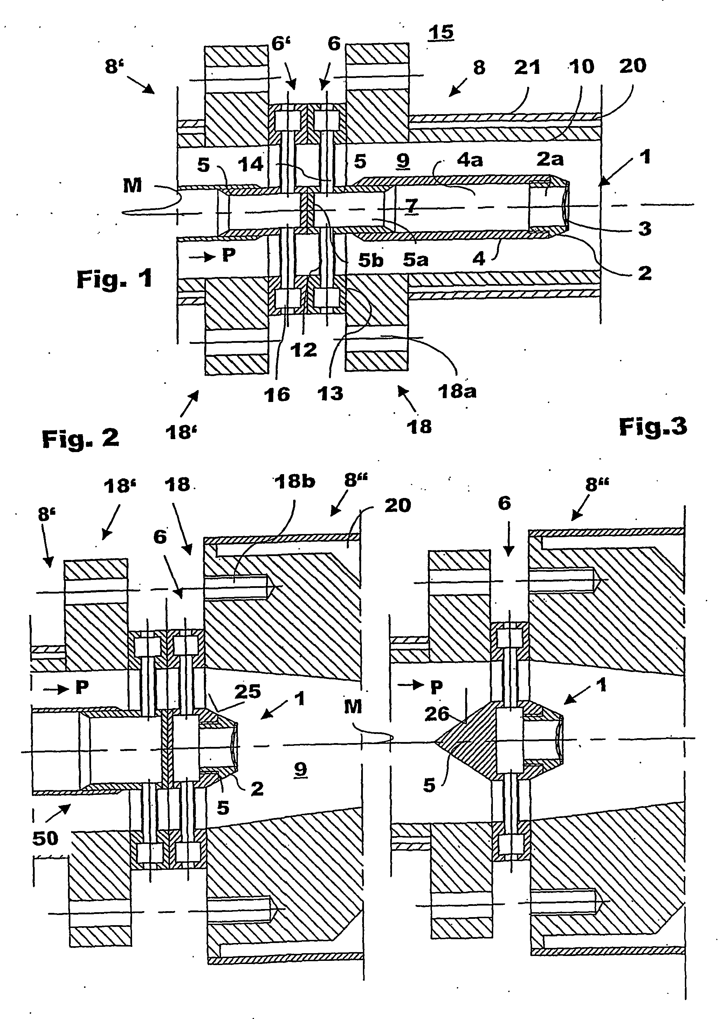

Zunächst wird der Aufbau des ersten Ausführungsbeispiels einer erfindungsgemäßen Berstschutzschutzeinrichtung mit Bezug auf die Fig. 1 beschrieben.

Fig. 1 zeigt ein erstes Ausführungsbeispiel einer erfindungsgemäßen Berstschutzeinrichtung 1. Die Berstschutzeinrichtung 1 weist einen Berstkörper 2 mit einer zentralen Durchgangsöffnung 2a und einer Berstscheibe 3 auf. Der Berstkörper 2 ist lösbar und dicht mit einem rohrförmigen Innenkörper 4 verbunden, der wiederum an einem Rohrabschnitt 5 eines Befestigungskörpers 6 dicht angebracht ist. Die Berstschutzeinrichtung 1 ist rotationssymmetrisch in Bezug auf eine Mittenlinie M.

Die Berstschutzeinrichtung 1 bildet ein Druckausgleichsvolumen 7 aus, das von der zentralen Durchgangsöffnung 2a, dem Innenraum 4a des Innenkörpers 4 und einer Mittenöffnung 5a gebildet wird.

Durch die Befestigungskörper 6 ist die Berstschutzeinrichtung 1 an einem im wesentlichen rohrförmigen Fluidleitungsstück 8 angebracht, in dem in einem im wesentlichen ringförmigen Arbeitsfluidleitungsbereich 9 zwischen der Wandung 10 des Fluidleitungsstückes 8 und der Außenwandung des Innenkörpers 4 ein Arbeitsfluid in Richtung P strömt.

Das Fluidleitungsstück der Fig. 1 ist speziell für die Durchleitung einer Spinnlösung, enthaltend Wasser, Cellulose und tertiäres Aminoxid, als Arbeitsfluid ausgestaltet. Das Fluidleitungsstück wird in einer Spinnanlage eingesetzt, in der die Spinnlösung durch das Fluidleitungssystem bestehend aus mehreren hintereinandergeschalteten Fluidleitungsstücken 8 von einem Reaktionsbeälter (nicht dargestellt), in dem die Spinnlösung hergestellt wird, zu einem Extrusionskopf, durch den die Spinnlösung zu Formkörpern extrudiert wird, gefördert. Die Spinnlösung neigt zu einer exothermen Reaktion, wenn sie über eine bestimmte Temperatur erhitzt wird oder bei bestimmten Temperaturen lange lagert.

Das Druckausgleichsvolumen 7 ist koaxial und beabstandet zur Wandung 10 in der Mitte des Fluidleitungsstückes angeordnet und nimmt damit die Position der Kernströmung des Arbeitsfluids ein. Um die Berstschutzeinrichtung 1 in dieser Position zu halten, ist der Befestigungskörper 6 mit Abstandhaltern 12 versehen, die in Umfangsrichtung beabstandet sind und sich in radialer Richtung bzw. in Speichenform vom Rohrabschnitt 5 in die Strömung des Arbeitsfluids erstrecken und in einem Ringkörper 13 enden, der zum Arbeitsfluidleitungsbereich 9 hin bündig mit der Außenwandung 10 abschließt. Das Druckausgleichsvolumen 7 des Ausführungsbeispiels der Fig. 1 kann mit einem gegenüber dem Arbeitsfluid inerten Gas oder mit einer gegenüber dem Arbeitsfluid inerten Flüssigkeit, beispielsweise Wasser, gefüllt sein.

Die Mittenöffnung 5a des Rohrabschnitts 5 des Befestigungskörpers 6 ist an der dem Druckausgleichsvolumen 7 abgewandten Seite durch einen Verschlusskörper 5b verschlossen. Im Ausführungsbeispiel ist der Verschlusskörper 5b scheibenförmig ausgestaltet.

Um Strömungsverluste bei der Durchströmung des Arbeitsfluids möglichst gering zu halten und um keine Stagnationsgebiete zu schaffen, in denen das Arbeitsfluid altern kann, weisen die Abstandhalter 12 einen stromlinienförmigen Querschnitt auf. In einer beliebigen Anzahl der Abstandhalter 11 des Befestigungskörpers 6 sind Druckentlastungsleitungen 14 vorgesehen, die das Druckausgleichsvolumen 7 mit der Außenumgebung 15 des Fluidleitungsstückes 8 verbinden.

Die Druckentlastungsleitungen 14 enden in einem Ringraum 16, der über Anschlussleitungen (nicht gezeigt) mit Anschlüssen verbunden ist, an denen weitere Gerätschaften angeschlossen werden können. Die Anschlüsse dienen der dichten Verbindung des Druckausgleichsvolumens 7 mit diesen Gerätschaften, um beispielsweise den Druck und/oder die Temperatur oder andere Zustandsgrößen im Druckausgleichsvolumen zu messen, oder um in das Druckausgleichsvolumen 7 eintretendes Arbeitsfluid aus dem Fluidleitungssystem abzuleiten.

Das spezifische Berstschutzeinrichtungsanordnungsverhältnis V errechnet aus V = L / √(D_{AD}), wobei L den Abstand in mm zwischen zwei benachbarten Bersteinrichtungen bezeichnet und sich ein adäquate Durchmesser D_{AD} in mm errechnet aus D_{AD} = √ (Dₐ²-Dᵢ²). Der Wert D_{A} bezeichnet den Außendurchmesser und D, den Innendurchmesser des ringförmigen Arbeitsfluidleitungsbereichs 9 in mm. Das spezifische Berstschutzeinrichtungsanordnungsverhältnis V beträgt weniger als 3000, bevorzugt weniger als 2000, am meisten bevorzugt weniger als 1500. Diese Verhältnisse sind notwendig, damit vor allem auch bei kleinen Leitungen bei Überschreiten des Berstdruckes keine zu großen Ableitungswege für das Arbeitsfluid zur Bersteinrichtung entstehen.

Das spezifische Druckausgleichsvolumen berechnet sich zu L·D_{AD}²·π/4, wobei L die Länge des abzusichernden Rohrbereichs, D_{A} der Außendurchmesser und D₁ der Innendurchmesser des ringförmigen Arbeitsfluidleitungsbereichs 9 ist. Das spezifische Druckausgleichvolumen beträgt weniger als 500 Liter, bevorzugt weniger als 300 Liter, am meisten bevorzugt weniger als 150 Liter. Diese Größenordnungen sind notwendig, damit pro Volumen an Arbeitsfluid für den Fall einer exothermen Reaktion ausreichender Platz für das durch die Reaktion verdrängte Arbeitsvolumen vorhanden ist. Je eine Berstschutzeinrichtung ist dabei für eine Länge L vorgesehen, um aus diesem Rohrabschnitt da Arbeitsfluid abszuleiten.

Zur Befestigung mehrerer Fluidleitungsstücke hintereinander ist an jedem Fluidleitungsstück ein Verbindungsabschnitt 18 ausgebildet, der mit dem Verbindungsabschnitt 18' des nächsten Fluidleitungsstückes 8' zur Bildung eines modular aufgebauten Fluidleitungssystems verbindbar ist. Hierzu ist der Verbindungsabschnitt 18 flanschförmig ausgebildet und mit Durchgangsöffnungen 18a versehen. Durch die Durchgangsöffnungen 18a können Schrauben (nicht gezeigt) gesteckt werden, sodass eine Schraubverbindung die Fluidleitungsstücke 8, 8' miteinander verbindet. Jedwede andere Ausbildung des Verbindungsabschnittes 18, die dem gleichen Zweck dient, kann gleichwirkend verwendet werden.

Der Befestigungsabschnitt 6 eines Fluidleitungsstückes 8 ist beim Aufbau des Fluidleitungssystems aus Fluidleitungsstücken 8, 8' zwischen den jeweiligen Verbindungsabschnitten 18, 18' sandwichartig eingeklemmt. Zur Positionierung in radialer Richtung können Anschläge, Zentrierbohrungen etc. vorgesehen sein. Ebenso können Dichtelemente (nicht gezeigt) in Mittenrichtung M zwischen dem Befestigungskörper 6 und dem Verbindungsabschnitt 18 oder zwischen zwei aneinanderstoßenden Befestigungskörpern 6, 6' angebracht sein.

Das Fluidleitungsstück 8 des Ausführungsbeispiels der Fig. 1 ist des Weiteren mit einer Manteltemperierungseinrichtung versehen, die einen die Wandung 10 umgebenden, ringförmigen Hohlraum 20 aufweist. Der Hohlraum 20 ist von einem Außenrohr 21 umschlossen und erstreckt sich von einem in Mittenrichtung M gelegenen Ende des Fluidleitungsstückes zum anderen Ende. Durch den Hohlraum 20 strömt in Strömungsrichtung P des Arbeitsfluids oder entgegengesetzt zur Richtung P ein Temperierungsfluid, das eine vom Arbeitsfluid unterschiedliche Temperatur aufweist.

Durch die Manteltemperiereinrichtung wird die Temperatur des Arbeitsfluids im Arbeitsfluidleitungsbereich 9 gesteuert. Dazu wird die Temperatur des Temperierungsfluids durch eine Steuervorrichtung (nicht gezeigt) auf einer bestimmten Temperatur gehalten, die höher oder niedriger als die Temperatur des Arbeitsfluids sein kann.

Im folgenden wird die Funktion der erfindungsgemäßen Berstschutzeinrichtung 1 anhand des Ausführungsbeispiels der Fig. 1 erläutert.

Durch die Berstschutzeinrichtung 1 soll vermieden werden, dass durch den Reaktionsdruck, wie er bei einer spontanen exothermen Reaktion des Arbeitsfluids im Fluidleitungsstück erzeugt wird, Geräte beschädigt werden. Dazu leitet die Berstschutzeinrichtung 1 den Reaktionsdruck nach außerhalb des Fluidleitungsstückes.

Die Berstschutzeinrichtung ist in Fig. 1 in einem Normalbetriebszustand gezeigt, in dem das Druckausgleichsvolumen 7 durch die Berstscheibe 3, den Berstkörper 2, die Wandung des Innenkörpers 6 und die Wandung des Rohrabschnittes 5 vom Arbeitsfluid im Arbeitsfluidleitungsbereich 2 getrennt ist.

Bei einer spontan auftretenden exothermen Reaktion des Arbeitsfluids steigt der Druck im Fluidleitungsstück 1 plötzlich an. Wird ein vorbestimmter Berstdruck im Arbeitsfluid überschritten, so wird die Berstschutzeinrichtung in den Berstzustand überführt und die Berstscheibe 3 bricht: Das Arbeitsfluid strömt in das Druckausgleichsvolumen 7. Aus dem Druckausgleichsvolumen 7 wird das Arbeitsfluid über die Druckentlastungsleitungen 14 und die nicht dargestellten Anschlüsse abgeleitet und der Reaktionsdruck schnell abgebaut.

Die Wandstärken der Elemente 2, 4, 5, 5a, 6, 12 sind allesamt so bemessen, dass sie dem Reaktionsdruck beschädigungsfrei standhalten können. Ebenso kann das Fluidleitungsstück 8 den Reaktionsdruck ohne Beschädigungen aushalten. Dadurch ist sichergestellt, dass bei einer exothermen Reaktion des Arbeitsfluids nur die Berstscheibe 3 zu Bruch geht.

Die gebrochene Berstscheibe 3 kann einfach durch Austausch des Berstkörpers 2 ersetzt werden. Hierzu ist der Berstkörper lösbar mit dem Innenkörper 4 verbunden. Im Ausführungsbeispiel der Fig. 1 wird zur Verbindung von Innenkörper 4 und Berstkörper 2 ein selbstdichtendes Gewinde verwendet.

Anstelle der Berstscheibe 3 können auch andere Varianten verwendet werden. Beispielsweise können einzelne Wandbereiche der Elemente 2, 4, 5, 5a, 6, 12 gegenüber ihrer Umgebung als Sollbruchstellen ausgeführt sein. Diese Sollbruchstellen stellen dann bei Überschreiten des Berstdruckes eine Verbindung zwischen dem Arbeitsfluidleitungsbereich 9 und dem Druckausgleichsvolumen 7 her.

Die Länge des Innenkörpers 4 in Mittenrichtung M ist beliebig. Der Innenkörper 5 kann sich insbesondere über die gesamte Länge des Fluidleitungsstückes 8 erstrecken. Um in diesem Fall des Innenkörpers 4 zu halten kann er an beiden Enden durch Befestigungskörper 6 gehalten sein.

Im folgenden wird der Aufbau des zweiten Ausführungsbeispiels der erfindungsgemäßen Berstschutzeinrichtung mit Bezug auf die Fig. 2 beschrieben.

Dabei werden in der Fig. 2 für Elemente, deren Funktion den Elementen der Fig. 1 entspricht, die selben Bezugszeichen verwendet. Der Einfachheit halber wird nur auf die Unterschiede zwischen dem ersten und dem zweiten Ausführungsbeispiel eingegangen.

Die Berstschutzeinrichtung gemäß Fig. 2 weist keinen Innenkörper 4 auf. Der Berstkörper 2 ist vielmehr direkt mit dem Rohrabschnitt 5 des Befestigungskörpers 6 verbunden. Zur Verbindung der Teile 6 und 6 wird eine Schraubverbindung eingesetzt.

Die Baulänge in Mittenrichtung M bzw. Strömungsrichtung P des Arbeitsfluids ist bei der Ausführungsform des Fig. 2 kürzer als beim Ausführungsbeispiel der Fig. 1. Dadurch ist die Berstschutzeinrichtung gemäß dem zweiten Ausführungsbeispiel besonders für den Einbau in Fluidleitungsstücke 8" ausgebildet, die als Reduzierstücke dienen. Bei einem Reduzierstück 8" verringert sich der Strömungsquerschnitt des Arbeitsfluidleitungsbereichs 9 in Strömungsrichtung P. Um eine Blockierung des Strömungsquerschnittes zu vermeiden, sollte die Berstschutzeinrichtung daher nicht in den sich verringernden Strömungsquerschnitt ragen.

Um die Strömung im Reduzierstück 8" möglichst wenig zu stören, ist die Bersteinrichtung im Bereich des Rohrabschnittes 5 und des Berstkörpers 2 stromlinienförmig ausgebildet. Im Ausführungsbeispiel der Fig. 2 ist eine sich verjüngende Fläche 25 vorgesehen.

Das Reduzierstück weist ebenfalls eine Manteltemperierungsvorrichtung mit einem Hohlraum 20 auf.

Im Befestigungsabschnitt 18" des Reduzierstückes 8" ist eine Gewindeöffnung 18b vorgesehen, in die eine Befestigungsschraube zur Verbindung des Reduzierstückes 8" mit einem weiteren Fluidleitungsstück herzustellen.

Die Funktion der Bersteinrichtung der Fig. 2 ist die selbe wie die der Fig. 1.

Das Reduzierstück 8" ist ebenfalls mit einem Verbindungsabschnitt 18 versehen, an den der Verbindungsabschnitt 18' eines weiteren Fluidleitungsstückes 8' befestigbar ist.

Im gezeigten Fluidleitungsstück 8' ist eine Innentemperiereinrichtung 50 eingebaut, die ebenfalls den Befestigungskörper 6 verwendet. Durch seine vielseitige Verwendbarkeit bei einer Vielzahl von Einbauten in Fluidleitungsstücke für Spinnanlagen stellt der Befestigungskörper eine eigene Erfindung dar, die selbständig schutzfähig ist. Die Durchmesser der Einbauten im Arbeitsfluidleitungsbereich 9 sind gleich bemessen, sodass hintereinander geschaltete Einbauten 1, 50 zu einer glatten, zylinderförmigen Oberfläche führen.

Die Berstschutzeinrichtung 1 und die Innentemperierungseinrichtung 50 liegen an den verschlossenen, axialen Enden des Innenkörpers stoßfrei aneinander. Die Innentemperiereinrichtung 50 wird weiter unten beschrieben.

Im folgenden wird der Aufbau des dritten Ausführungsbeispiels der erfindungsgemäßen Berstschutzeinrichtung mit Bezug auf die Fig. 3 beschrieben.

Dabei werden in der Fig. 3 für Elemente, deren Funktion den Elementen der Fig. 2 entspricht, die selben Bezugszeichen verwendet. Der Einfachheit halber wird nur auf die Unterschiede zwischen dem zweiten und dem dritten Ausführungsbeispiel eingegangen.

Die Berstschutzeinrichtung 1 gemäß dem dritten Ausführungsbeispiel ist für den alleinstehenden Einbau in ein Fluidleitungssystem aus zumindest zwei Fluidleitungsstücken 8, 8' oder 8" vorgesehen. Hierzu ist der Rohrabschnitt 5 an einer in Strömungsrichtung P des Arbeitsfluids gerichteten Seite mit einer stromlinienförmigen Verkleidung 26 versehen, durch welche die Strömung des Arbeitsfluids verlustfrei geteilt werden kann. Bei relativ zur Strömungsrichtung P umgekehrten Einbau kann die Strömung durch die Verkleidung 26 verlustfrei wieder zusammengeführt werden.

Die Verkleidung kann - wie in Fig. 3 dargestellt - einstückig vom Rohrabschnitt 5 ausgebildet sein. Alternativ kann auch das Verschlussmittel 5b Stromlinienform aufweisen.

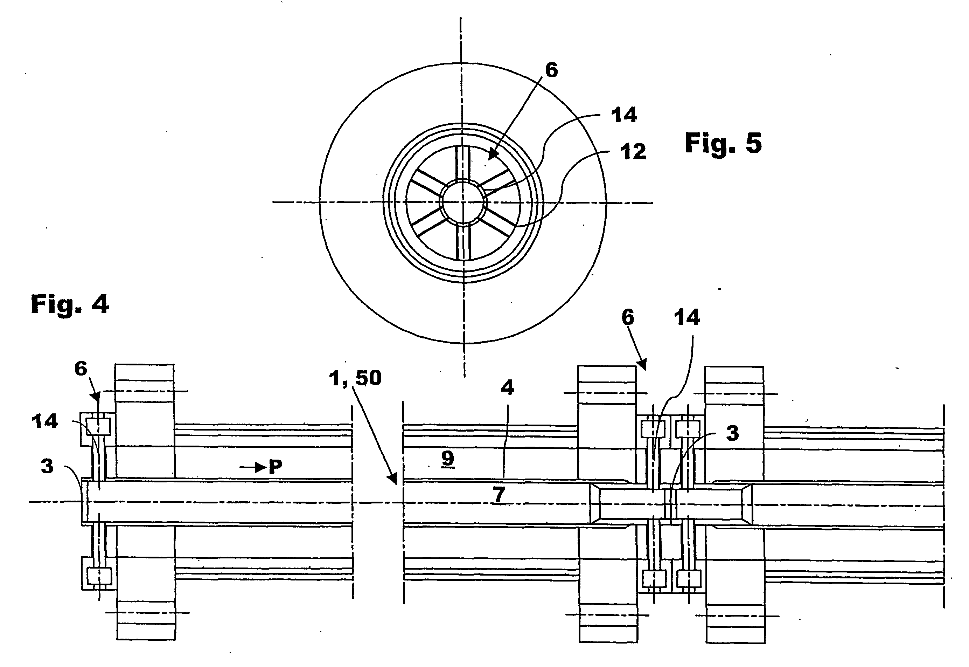

Im folgenden wird der Aufbau des vierten Ausführungsbeispiels der erfindungsgemäßen Berstschutzeinrichtung mit Bezug auf die Fig. 4 beschrieben.

Dabei werden in der Fig. 4 für Elemente, deren Funktion den Elementen der Fig. 1 entspricht, die selben Bezugszeichen verwendet. Der Einfachheit halber wird nur auf die Unterschiede zwischen dem ersten und dem vierten Ausführungsbeispiel eingegangen.

Im Ausführungsbeispiel der Fig. 4 erfüllt die Berstchutzeinrichtung 1 eine Doppelfunktion als Innentemperierungseinrichtung 50. Die Innentemperierungseinrichtung 50 dient zur Steuerung der Temperatur des Arbeitsfluids im Arbeitsfluidleitungsbereich 9 von innen her. Wie die Manteltemperierungseinrichtung wird die Innentemperierungseinrichtung 50 dazu von einem Temperierungsfluid durchströmt.

Normalerweise ist es zwar vorgesehen, Fluidleitungsstücke mit Innentemperierungseinrichtung und Fluidleitungsstücke mit Berstschutzeinrichtung hintereinander, vorzugsweise abwechselnd, anzuordnen. Doch können auch Innentemperierungseinrichtung und Berstschutzeinrichtung zusammengefasst werden.

Dazu wird der Innenkörper 4 an beiden Enden mit Befestigungskörpern 6 an Stelle der Kernströmung in einem Fluidleitungsstück 8 angebracht. An beiden Enden des Innenkörpers 4 wird das Druckausgleichsvolumen 7 mit den Druckentlastungsleitungen 14 der beiden Befestigungseinrichtungen 6 verbunden. Die beiden Druckentlastungsleitungen 6 dienen als Speiseleitungen zur Zufuhr eines gasförmigen oder flüssigen Temperierungsfluids in das Druckausgleichsvolumen 7. Je nach Speiserichtung kann das Temperierungsfluid in der Innentemperierungseinrichtung 50 in Richtung (Gleichstrom) oder entgegengesetzt (Gegenstrom) zur Richtung der Strömung P des Arbeitsfluids strömen.

Im Ausführungsbeispiel der Fig. 4 sind an den beiden axialen Enden der kombinierten Berstschutz- und Innentemperiervorrichtung 1, 50 Berstscheiben 3 angebracht. Dazu kann eines der in den Fig. 1 bis 3 gezeigten Ausführungsbeispiele verwendet werden. Alternativ kann auch nur an einem Ende eine Berstschutzvorrichtung vorgesehen sein.

Die Berstscheibe kann auch, wie in Fig. 4 dargestellt, ohne Verwendung eines Berstkörpers 3 direkt am Rohrabschnitt des Befestigungskörpers 6 angebracht sein. Diese Ausgestaltung ist unabhängig von ihrer Verwendung bei einer Innentemperierungsvorrichtung.

Durch die Innentemperierungseinrichtung kann die Temperatur im ringförmigen Strömungsquerschnitt des Arbeitsfluidleitungsbereichs 9 besonders genau eingestellt werden, da mit der Innentemperierungseinrichtung 50 und der Manteltemperierungseinrichtung 20 eine große Fläche für den Wärmeübergang zwischen Temperierungsfluid und Arbeitsfluid zur Verfügung steht und gleichzeitig die Dicke der zu temperierenden Arbeitsfluidschicht im Ringspalt gering ist.

Je nachdem, ob die Temperatur des Temperierungsfluids in der Innentemperierungseinrichtung größer oder kleiner als die Temperatur Arbeitsfluids ist, wird das Arbeitsfluid gekühlt oder beheizt. Gleiches gilt für die Manteltemperierungseinrichtung, wobei die Temperierungsfluide von Innentemperierungseinrichtung und Manteltemperierungseinrichtung unabhängigen Versorgungssystem angehören können.

Bei Überschreiten des Berstdruckes bricht die Berstscheibe 3 und das Arbeitsfluid strömt in das Druckausgleichsvolumen. Um Reaktionen zwischen dem Arbeitsfluid und dem Temperierungsfluid zu vermeiden, sollte das Temperierungsfluid gegenüber dem Arbeitsfluid inert sein.

Wie zuvor wird der Reaktionsdruck über die Druckentiasuntgseinrichtung 14 abgeleitet. Um Beschädigungen des Temperierungsfluidsystems zu vermeiden, können zwischen dem Druckausgleichsvolumen und dem Versorgungssystem für das Temperierungsfluid Schutzeinrichtungen vorgesehen sein, wie Rückschlagventile, die eine Beschädigung dieser Systeme durch den Reaktionsdruck verhindern.

## Patentansprüche

1. Berstschutzeinrichtung (1) für ein Fluidleitungsstück (8, 8') zur Durchleitung eines spontan exotherm reagierenden Arbeitsfluids wie eines synthetischen Polymers oder einer Polymerlösung, eines Cellulosederivats oder einer Lösung aus Cellulose, Wasser und Aminoxid sowie Mischungen davon, wobei das Fluidleitungsstück (8, 8') einen vom Arbeitsfluid durchströmten Arbeitsfluidleitungsbereich (9) und die Berstschutzeinrichtung (1) ein Druckausgleichsvolumen (7) aufweist, das bei Überschreiten eines vorbestimmten Berstdruckes im Arbeitsfluid von einem Normalbetriebszustand, in dem das Druckausgleichsvolumen (7) vom Arbeitsfluidleitungsbereich (9) abgetrennt ist, in einem Berstzustand, in dem das Druckausgleichsvolumen (7) mit dem Arbeitsfluidleitungsbereich (9) verbunden ist, überführbar ist, wobei die Berstschutzeinrichtung mindestens einen Befestigungskörper (6) aufweist, durch den das Druckausgleichsvolumen (7) zumindest abschnittsweise innerhalb des Arbeitsfluidleitungsbereichs (9) und vom Arbeitsfluid zumindest abschnittsweise umströmt gehalten ist, und wobei das Druckausgleichsvolumen (7) mit der Außenumgebung (15) des Fluidleitungsstückes (8, 8') verbunden ist, **dadurch gekennzeichnet, dass** der Befestigungskörper (6) zwischen zwei Fluidleitungsstücke (8, 8') anbringbar ausgestaltet ist. >

2. Berstschutzeinrichtung nach Anspruch 1, **dadurch gekennzeichnet, dass** zumindest eine vom Druckausgleichsvolumen (7) zur Außenseite des Fluidleitungsstücks geführte Druckentlastungsleitung (14) vorgesehen ist.

3. Berstschutzeinrichtung nach Anspruch 1 oder 2, **dadurch gekennzeichnet, dass** das Druckausgleichsvolumen (7) von einem im wesentlichen rohrförmigen Innenkörper (4) gebildet ist.

4. Berstschutzeinrichtung nach einem der oben genannten Ansprüche, **dadurch gekennzeichnet, dass** zumindest ein Abstandhalter (12) vorgesehen ist, der in das Arbeitsfluid ragt und durch den das Druckausgleichsvolumen (7) beabstandet von einer Außenwandung (10) des Arbeitsfluidleitungsbereichs (10) gehalten ist.

5. Berstschutzeinrichtung nach Anspruch 4, **dadurch gekennzeichnet, dass** die Druckentlastungsleitung (14) in einem Abstandhalter (12) angeordnet ist.

6. Berstschutzeinrichtung nach Anspruch 4 oder 5, **dadurch gekennzeichnet, dass** der Abstandhalter (12) einen im wesentlichen stromlinienförmigen Querschnitt aufweist.

7. Berstschutzeinrichtung nach einem der Ansprüche 4 bis 6, **dadurch gekennzeichnet, dass** der Abstandhalter (10) am Befestigungskörper (6) ausgebildet ist.

8. Berstschutzeinrichtung nach Anspruch 7, **dadurch gekennzeichnet, dass** der Befestigungskörper (6) eine Mehrzahl von Abstandhaltern (12) aufweist, die in Umfangsrichtung verteilt und vorzugsweise speichenförmig ausgebildet sind.

9. Berstschutzeinrichtung nach einem der oben genannten Ansprüche, **dadurch gekennzeichnet, dass** der Befestigungskörper (6) einen rohrförmigen Abschnitt aufweist, an dem der Innenkörper (4) einer Temperiervorrichtung (50) oder einer Berstschutzvorrichtung (1) befestigbar ist.

10. Berstschutzeinrichtung nach einem der oben genannten Ansprüche, **dadurch gekennzeichnet, dass** das Druckausgleichsvolumen (7) in der Mitte des Arbeitsfluidleitungsbereichs (9) an Stelle der Kernströmung des Arbeitsfluids angeordnet ist.

11. Berstschutzeinrichtung nach einem der oben genannten Ansprüche, **dadurch gekennzeichnet, dass** die Berstschutzeinrichtung (1) zumindest einen Berstkörper (2) mit mindestens einem Sollbruchabschnitt (3) aufweist, der dem Druck im Arbeitsfluidleitungsbereich (2) ausgesetzt ist und an das Druckausgleichsvolumen (7) grenzt, wobei der Sollbruchabschnitt (3) als Schwächungsstelle ausgebildet ist, deren mechanische Festigkeit gegenüber seiner Umgebung verringert ist.

12. Berstschutzeinrichtung nach Anspruch 11, **dadurch gekennzeichnet, dass** der Berstkörper (2) eine im wesentlichen stromlinienförmige Außenform aufweist.

13. Berstschutzeinrichtung nach Anspruch 11 oder 12, **dadurch gekennzeichnet, dass** der Berstkörper (2) lösbar an der Berstschutzeinrichtung (1) angeordnet ist.

14. Berstschutzeinrichtung nach einem der Ansprüche 11 bis 13, **dadurch gekennzeichnet, dass** der Sollbruchabschnitt als eine Berstscheibe (14) ausgestaltet ist, durch die im Normalbetriebszustand eine vorzugsweise axiale Endfläche des Innenkörpers (4) verschlossen ist.

15. Berstschutzeinrichtung nach einem der oben genannten Ansprüche, **dadurch gekennzeichnet, dass** die Berstschutzeinrichtung gleichzeitig als eine Innentemperiervorrichtung (50) ausgestaltet ist, deren Temperatur zumindest abschnittsweise im vom Arbeitsfluid umströmten Bereich zur Steuerung der Temperatur des Arbeitsfluids steuerbar ist.

16. Berstschutzeinrichtung nach Anspruch 15, **dadurch gekennzeichnet, dass** durch das Druckausgleichsvolumen (7) ein Temperierungsfluid aufgenommen ist, dessen Temperatur durch eine Steuereinrichtung einstellbar ist.

17. Berstschutzeinrichtung nach Anspruch 14 oder 15, **dadurch gekennzeichnet, dass** die Druckentlastungsleitung (14) als Speiseleitung zur Zufuhr des Temperierungsfluids dient.

18. Berstschutzeinrichtung nach Anspruch 17, **dadurch gekennzeichnet, dass** das Druckausgleichsvolumen (7) mit zwei in Durchströmungsrichtung (P) des Arbeitsfluids beabstandeten Speiseleitungen (14) verbunden ist.

19. Berstschutzeinrichtung nach einem der oben genannten Ansprüche, **dadurch gekennzeichnet, dass** das Fluidleitungsstück (1) eine Manteltemperiereinrichtung zur Steuerung der Temperatur des Arbeitsfluids aufweist, wobei die Manteltemperiereinrichtung den Arbeitsfluidleitungsbereich (9) zumindest abschnittsweise umgibt, und die Temperatur der Manteltemperiereinrichtung durch eine Steuereinrichtung steuerbar ist.

20. Berstschutzeinrichtung nach Anspruch 19, **dadurch gekennzeichnet, dass** die Manteltemperiereinrichtung (9) einen von einem Temperierungsfluid durchströmten Hohlraum (21) aufweist, wobei sich die Temperatur des Temperierungsfluids sich von der Temperatur des Arbeitsfluids unterscheidet.

21. Fluidleitungsstück zur Durchleitung eines spontan exotherm reagierenden Arbeitsfluids wie eines synthetischen Polymers, eines Cellulosederivats oder einer Lösung aus Cellulose, Wasser und Aminoxid, mit einem vom Arbeitsfluid durchströmten Arbeitsfluidleitungsbereich, **dadurch gekennzeichnet, dass** das Fluidleitungsstück (8) mit einer Berstschutzeinrichtung (1) gemäß einem der oben genannten Ansprüche versehen ist.

22. Fluidleitungsstück nach Anspruch 21, **dadurch gekennzeichnet, dass** das Fluidleitungsstück mit einer Innentemperierungseinrichtung (50) versehen ist.

23. Modulares Fluidleitungssystem aus wenigstens zwei Fluidleitungsstücken (8, 8') zur Durchleitung eines spontan exotherm reagierenden Arbeitsfluids wie eines synthetischen Polymers, eines Cellulosederivats oder einer Lösung aus Cellulose, Wasser und Aminoxid, mit einem vom Arbeitsfluid durchströmten Arbeitsfluidleitungsbereich (9), **dadurch gekennzeichnet, dass** zwischen den Verbindungsabschnitten (18, 18') zweier hintereinander geschalteter Fluidleitungsstücke (8, 8'; 8', 8") eine Berstschutzeinrichtung (1) nach einem der oben genannten Ansprüche angebracht ist.

24. Modulares Fluidleitungssystem nach Anspruch 23, **dadurch gekennzeichnet, dass** die Berstschutzeinrichtung (1) zwischen den Verbindungsabschnitten (18, 18') zweier hintereinandergeschalteter Fluidleitungsstücke (8, 8'; 8', 8") angebracht ist.

25. Modulares Fluidleitungssystem nach Anspruch 23 oder 24, **dadurch gekennzeichnet, dass** ein Fluidleitungsstück (8) mit einer Berstschutzeinrichtung (1) sich mit einem Fluidleitungsstück mit Innentemperierungseinrichtung (50) abwechselt.

26. Anlage zur Durchleitung und Verarbeitung eines spontan exotherm reagierenden Arbeitsfluids zu Formkörpern aus einem synthetischen Polymer, einem Cellulosederivat oder einer Lösung aus Cellulose, Wasser und Aminoxid sowie Mischungen davon, umfassend ein modular aufgebautes Fluidleitungssystem mit Fluidleitungsstücken, die eine Temperiereinrichtung oder eingebaute Apparate und Armaturen wie Pumpen, Filter, Wärmetauscher, Mischreaktoren, Kugelhähnen etc. und mit in regelmäßigen Abständen angeordneten Berstschutzeinrichtungen, **dadurch gekennzeichnet dass** zumindest eine Berstschutzeinrichtung vorgesehen ist, die nach einem der Ansprüche 1 bis 20 ausgebildet ist.

27. Anlage nach Anspruch 26, **dadurch gekennzeichnet, dass** das spezifische Berstschutzeinrichtungsanordnungsverhältnis V weniger als 3000 beträgt.

28. Anlage nach Anspruch 27, **dadurch gekennzeichnet, dass** das spezifische Berstschutzeinrichtungsanordnungsverhältnis V weniger als 2000 beträgt.

29. Anlage nach Anspruch 28, **dadurch gekennzeichnet, dass** das spezifische Berstschutzeinrichtungsanordnungsverhältnis V weniger als 1500 beträgt.

30. Anlage nach einem der Ansprüche bis 29, **dadurch gekennzeichnet dass**, das spezifische Druckausgleichvolumen weniger als 500 Liter beträgt.

31. Anlage nach Anspruch 30, **dadurch gekennzeichnet dass**, das spezifische Druckausgleichvolumen weniger als 300 Liter beträgt.

32. Anlage nach Anspruch 31, **dadurch gekennzeichnet dass**, das spezifische Druckausgleichvolumen weniger als 150 Liter beträgt.

33. Anlage nach einem der Ansprüche 26 bis 32, **dadurch gekennzeichnet, dass** das Arbeitsfluid als kristallisierendes, wärmesensitives Arbeitsfluids aus einer Spinnlösung enthaltend Cellulose, Wasser und ein tertiäres Aminoxid, beispielsweise N-Methylmorpholin N-Oxid (NMMO), aus Stabilisatoren zur thermischen Stabilisierung der Cellulose und des Lösungsmittels sowie gegebenenfalls aus weiteren Additiven wie Titandioxid, Bariumasulfat, Graphit, Carboxymethylcellulosen, Polyethylenglycole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Russe oder elektrisch leitfähige Russe, Kieselsäure, organische Lösungsmittel als Verdünnungsmittel, etc. zusammengesetzt sein kann.

## Claims

1. A burst protection device (1) for a fluid line member (8, 8') for passing therethrough a spontaneously exothermally reacting working fluid, such as a synthetic polymer or a polymer solution, a cellulose derivative or a solution consisting of cellulose, water and amine oxide, as well as mixtures thereof, said fluid line member (8, 8') comprising a working fluid line portion (9) flown through by the working fluid, and said burst protection device (1) comprising a pressure compensating volume (7) which when a predetermined burst pressure is exceeded in the working fluid can be transferred from a normal operative state in which the pressure compensating volume (7) is separated from the working fluid line portion (9), into a burst state in which the pressure compensating volume (7) is connected to the working fluid line portion (9), the burst protection device comprising at least one fastening body (6) by which the pressure compensating volume (7) is kept at least sectionwise within the working fluid line portion (9) and in a state where it is circumflown by the working fluid at least sectionwise, and the pressure compensating volume (7) being connected to the outside (15) of the fluid line member (8, 8'), **characterized in that** the fastening body (6) is designed to be mountable between two fluid line members (8, 8').

2. The burst protection device according to claim 1, **characterized in that** there is provided at least one pressure relief line (14) leading from said pressure compensating volume (7) to the outside of said fluid line member.

3. The burst protection device according to claim 1 or 2, **characterized in that** said pressure compensating volume (7) is formed by a substantially tubular inner body (4).

4. The burst protection device according to any one of the aforementioned claims, **characterized in that** at least one spacer (12) is provided which projects into the working fluid and by which said pressure compensating volume (7) is kept spaced-apart from an outer wall (10) of said working fluid line portion (10).

5. The burst protection device according to claim 4, **characterized in that** said pressure relief line (14) is arranged in a spacer (12).

6. The burst protection device according to claim 4 or 5, **characterized in that** said spacer (12) has a substantially streamlined cross-section.

7. The burst protection device according to any one of claims 4 to 6, **characterized in that** said spacer (10) is formed on said fastening body (6).

8. The burst protection device according to claim 7, **characterized in that** said fastening body (6) comprises a plurality of spacers (12) which are distributed in circumferential direction and preferably designed in the manner of spokes.

9. The burst protection device according to any one of the aforementioned claims, **characterized in that** said fastening body (6) has a tubular section to which the inner body (4) of a temperature control device (50) or a burst protection device (1) can be fastened.

10. The burst protection device according to any one of the aforementioned claims, **characterized in that** said pressure compensating volume (7) is arranged in the center of said working fluid line portion (9) replacing the core flow of the working fluid.

11. The burst protection device according to any one of the aforementioned claims, **characterized in that** said burst protection device (1) comprises at least one bursting body (2) having at least one predetermined breaking section (3) which is exposed to the pressure prevailing in said working fluid line portion (2) and is adjoined by said pressure compensating volume (7), said predetermined breaking section (3) being designed as a weakened place the mechanical strength of which is reduced in comparison with the surroundings thereof.

12. The burst protection device according to claim 11, **characterized in that** said bursting body (2) has a substantially streamlined outer shape.

13. The burst protection device according to claim 11 or 12, **characterized in that** said bursting body (2) is detachably arranged on said burst protection device (1).

14. The burst protection device according to any one of claims 11 to 13, **characterized in that** said predetermined breaking section is designed as a bursting disc (3) by which a preferably axial end surface of said inner body (4) is closed in the normal operative state.

15. The burst protection device according to any one of the aforementioned claims, **characterized in that** said burst protection device is simultaneously designed as an internal temperature control device (50) the temperature of which is controllable at least sectionwise in the area flown around by the working fluid for controlling the temperature of the working fluid.

16. The burst protection device according to claim 15, **characterized in that** a temperature control fluid whose temperature is adjustable by a control device is received by said pressure compensating volume (7).

17. The burst protection device according to claim 14 or 15, **characterized in that** said pressure relief line (14) serves as a feed line for the supply of the temperature control fluid.

18. The burst protection device according to claim 17, **characterized in that** said pressure compensating volume (7) is connected to two feed lines (14) spaced apart in the direction of flow (P) of the working fluid.

19. The burst protection device according to any one of the aforementioned claims, **characterized in that** said fluid line member (1) comprises a jacket temperature control device for controlling the temperature of the working fluid, said jacket temperature control device surrounding said working fluid line portion (9) at least sectionwise, and the temperature of said jacket temperature control device being controllable by a control device.

20. The burst protection device according to claim 19, **characterized in that** said jacket temperature control device (9) comprises a cavity (21) through which a temperature control fluid is flowing, the temperature of said temperature control fluid differing from the temperature of the working fluid.

21. A fluid line member for passing therethrough a spontaneously exothermally reacting working fluid, such as a synthetic polymer, a cellulose derivative or a solution consisting of cellulose, water and amine oxide, comprising a working fluid line portion through which the working fluid is flowing, **characterized in that** said fluid line member (8) is provided with a burst protection device (1) according to any one of the aforementioned claims.

22. The fluid line member according to claim 21, **characterized in that** said fluid line member is provided with an internal temperature control device (50).

23. A modular fluid line system consisting of at least two fluid line members (8, 8') for passing therethrough a spontaneously exothermally reacting working fluid, such as a synthetic polymer, a cellulose derivative or a solution consisting of cellulose, water and amine oxide, comprising a working fluid line portion (9) which has the working fluid flowing therethrough, **characterized in that** a burst protection device (1) according to any one of the above-mentioned claims is mounted between the connection sections (18, 18') of two fluid line members (8, 8'; 8', 8") that are arranged one after the other.

24. The modular fluid line system according to claim 23, **characterized in that** said burst protection device (1) is mounted between the connecting sections (18, 18') of two successively arranged fluid line members (8, 8'; 8', 8").

25. The modular fluid line system according to claim 23 or 24, **characterized in that** a fluid line member (8) with a burst protection device (1) alternates with a fluid line member with an internal temperature control device (50).

26. A facility for passing therethrough and processing a spontaneously exothermally reacting working fluid into molded bodies from a synthetic polymer, a cellulose derivative or a solution consisting of cellulose, water and amine oxide, as well as mixtures thereof, comprising a fluid line system of a modular structure with fluid line members, including a temperature control device or installed apparatus and fittings such as pumps, filters, heat exchangers, mixing reactors, ball valves, etc., and with burst protection devices arranged at regular intervals, **characterized in that** there is provided at least one burst protection device designed according to any one of claims 1 to 20.

27. The facility according to claim 26, **characterized in that** the specific burst protection device arrangement ratio V is less than 3000.

28. The facility according to claim 27, **characterized in that** the specific burst protection device arrangement ratio V is less than 2000.

29. The facility according to claim 28, **characterized in that** the specific burst protection device arrangement ratio V is less than 1500.

30. The facility according to any one of claims 1 to 29, **characterized in that** the specific pressure compensating volume is less than 500 liter.

31. The facility according to claim 30, **characterized in that** the specific pressure compensating volume is less than 300 liter.

32. The facility according to claim 31, **characterized in that** the specific pressure compensating volume is less than 150 liter.

33. The facility according to any one of claims 26 to 32, **characterized in that** the working fluid as a crystallizing, heat-sensitive working fluid may be composed of a spinning solution containing cellulose, water and a tertiary amine oxide, such as N-methylmorpholine N-oxide (NMMO), of stabilizers for the thermal stabilization of the cellulose and the solvent, and, optionally, of further additives such as titanium dioxide, barium sulfate, graphite, carboxymethyl celluloses, polyethylene glycols, chitin, chitosan, alginic acid, polysaccharides, dyes, antibacterially acting chemicals, flameproofing agents containing phosphorus, halogens or nitrogen, activated carbon, carbon blacks or electrically conductive carbon blacks, silicic acid, organic solvents as diluents, etc.

## Revendications

1. Dispositif anti-éclatement (1) pour un segment de conduite de fluide (8, 8') pour le transport d'un fluide de travail réagissant spontanément de manière exothermique, tel qu'un polymère synthétique ou une solution polymère, un dérivé de cellulose ou une solution composée de cellulose, d'eau et d'oxyde aminé ainsi que des mélanges de ceux-ci, le segment de conduite de fluide (8, 8') comportant une zone de conduite de fluide de travail (9) traversée par le fluide de travail et le dispositif anti-éclatement (1) comportant un volume de compensation de la pression (7) qui peut être basculé, en cas de dépassement d'une pression d'éclatement prédéfinie dans le fluide de travail, d'un état de service normal dans lequel le volume de compensation de la pression (7) est séparé de la zone de conduite de fluide de travail (9) à un état d'éclatement dans lequel le volume de compensation de la pression (7) est relié à la zone de conduite de fluide de travail (9), le dispositif anti-éclatement comportant au moins un élément de fixation (6) par le biais duquel le volume de compensation de la pression (7) est maintenu au moins partiellement à l'intérieur de la zone de conduite de fluide de travail (9) et entouré au moins partiellement par le fluide de travail et le volume de compensation de la pression (7) étant relié à l'environnement externe (15) du segment de conduite de fluide (8, 8'), **caractérisé en ce que** l'élément de fixation (6) est réalisé de manière à pouvoir être fixé entre deux segments de conduite de fluide (8, 8').

2. Dispositif anti-éclatement selon la revendication 1, **caractérisé en ce qu'**on a prévu au moins une conduite d'élimination de la pression (14) amenée par le volume de compensation de la pression (7) vers le côté externe du segment de conduite de fluide.

3. Dispositif anti-éclatement selon la revendication 1 ou 2, **caractérisé en ce que** le volume de compensation de la pression (7) est formé d'un élément interne tubulaire (4) pour l'essentiel.

4. Dispositif anti-éclatement selon l'une quelconque des revendications citées ci-dessus, **caractérisé en ce qu'**on a prévu au moins un écarteur (12) qui s'enfonce dans le fluide de travail et par le biais duquel le volume de compensation de la pression (7) est maintenu à distance d'une paroi externe (10) de la zone de conduite de fluide de travail (10).

5. Dispositif anti-éclatement selon la revendication 4, **caractérisé en ce que** la conduite d'élimination de la pression (14) est disposée dans un écarteur (12).

6. Dispositif anti-éclatement selon la revendication 4 ou 5, **caractérisé en ce que** l'écarteur (12) présente une coupe transversale fuselée pour l'essentiel.

7. Dispositif anti-éclatement selon l'une quelconque des revendications 4 à 6, **caractérisé en ce que** l'écarteur (10) est réalisé sur l'élément de fixation (6).

8. Dispositif anti-éclatement selon la revendication 7, **caractérisé en ce que** l'élément de fixation (6) comprend une multiplicité d'écarteurs (12) qui sont répartis dans le sens circonférentiel et sont réalisés de préférence en forme de rayon.

9. Dispositif anti-éclatement selon l'une quelconque des revendications citées ci-dessus, **caractérisé en ce que** l'élément de fixation (6) comprend une partie tubulaire à laquelle il est possible de fixer l'élément interne (4) d'un dispositif d'équilibrage de la température (50) ou d'un dispositif anti-éclatement (1).

10. Dispositif anti-éclatement selon l'une quelconque des revendications citées ci-dessus, **caractérisé en ce que** le volume de compensation de la pression (7) est disposé au milieu de la zone de conduite de fluide de travail (9) à la place de l'écoulement central du fluide de travail.

11. Dispositif anti-éclatement selon l'une quelconque des revendications citées ci-dessus, **caractérisé en ce que** le dispositif anti-éclatement (1) comprend au moins un élément d'éclatement (2) comportant au moins une partie destinée à la rupture (3) qui est soumise à la pression dans la zone de conduite de fluide de travail (2) et est adjacente au volume de compensation de la pression (7), la partie destinée à la rupture (3) étant réalisée sous la forme d'un point d'affaiblissement dont la résistance mécanique est réduite par rapport à son environnement.

12. Dispositif anti-éclatement selon la revendication 11, **caractérisé en ce que** l'élément d'éclatement (2) présente une forme externe fuselée pour l'essentiel.

13. Dispositif anti-éclatement selon la revendication 11 ou 12, **caractérisé en ce que** l'élément d'éclatement (2) est disposé de manière amovible sur le dispositif anti-éclatement (1).

14. Dispositif anti-éclatement selon l'une quelconque des revendications 11 à 13, **caractérisé en ce que** la partie destinée à la rupture est réalisée sous la forme d'un disque d'éclatement (14) par le biais duquel une surface d'extrémité de préférence axiale de l'élément interne (4) est fermée dans un état de service normal.

15. Dispositif anti-éclatement selon l'une quelconque des revendications citées ci-dessus, **caractérisé en ce que** le dispositif anti-éclatement est réalisé en même temps en tant que dispositif d'équilibrage de la température interne (50) dont la température est réglable au moins partiellement dans la zone entourée par le fluide de travail pour le réglage de la température du fluide de travail.

16. Dispositif anti-éclatement selon la revendication 15, **caractérisé en ce qu'**un fluide d'équilibrage de la température est absorbé par le volume de compensation de la pression (7), fluide dont la température est réglable au moyen d'un dispositif de réglage.

17. Dispositif anti-éclatement selon la revendication 14 ou 15, **caractérisé en ce que** la conduite d'élimination de la pression (14) sert de conduite d'alimentation pour l'amenée du fluide d'équilibrage de la température.

18. Dispositif anti-éclatement selon la revendication 17, **caractérisé en ce que** le volume de compensation de la pression (7) est relié à deux conduites d'alimentation (14) placées à distance dans le sens de la traversée (P) du fluide de travail.

19. Dispositif anti-éclatement selon l'une quelconque des revendications citées ci-dessus, **caractérisé en ce que** le segment de conduite de fluide (1) comprend un dispositif d'équilibrage de la température de l'enveloppe pour le réglage de la température du fluide de travail, le dispositif d'équilibrage de la température de l'enveloppe entourant la zone de conduite de fluide de travail (9) au moins partiellement et la température du dispositif d'équilibrage de la température de l'enveloppe étant réglable au moyen d'un dispositif de réglage.

20. Dispositif anti-éclatement selon la revendication 19, **caractérisé en ce que** le dispositif d'équilibrage de la température d'enveloppe (9) comprend une cavité (21) traversée par un fluide d'équilibrage de la température, la température du fluide d'équilibrage de la température se distinguant de la température du fluide de travail.

21. Segment de conduite de fluide pour le transport d'un fluide de travail réagissant spontanément de manière exothermique, tel qu'un polymère synthétique, un dérivé de cellulose ou une solution composée de cellulose, d'eau et d'oxyde aminé, comportant une zone de conduite de fluide de travail (9) traversée par le fluide de travail, **caractérisé en ce que** le segment de conduite de fluide (8) est équipé d'un dispositif anti-éclatement (1) conformément à l'une quelconque des revendications citées ci-dessus.

22. Segment de conduite de fluide selon la revendication 21, **caractérisé en ce que** le segment de conduite de fluide est équipé d'un dispositif d'équilibrage de la température interne (50).

23. Système de conduite de fluide modulaire composé d'au moins deux segments de conduite de fluide (8, 8') pour le transport d'un fluide de travail réagissant spontanément de manière exothermique, tel qu'un polymère synthétique, un dérivé de cellulose ou une solution composée de cellulose, d'eau et d'oxyde aminé, comportant une zone de conduite de fluide de travail (9) traversée par le fluide de travail, **caractérisé en ce qu'**entre les parties de raccord (18, 18') de deux segments de conduite de fluide montés l'un derrière l'autre (8, 8' ; 8', 8'') est fixé un dispositif anti-éclatement (1) selon l'une quelconque des revendications citées ci-dessus.

24. Système de conduite de fluide modulaire selon la revendication 23, **caractérisé en ce que** le dispositif anti-éclatement (1) est fixé entre les parties de raccordement (18, 18') de deux segments de conduite de fluide montés l'un derrière l'autre (8, 8' ; 8', 8'').

25. Système de conduite de fluide modulaire selon la revendication 23 ou 24, **caractérisé en ce qu'**un segment de conduite de fluide (8) comportant un dispositif anti-éclatement (1) s'alterne avec un segment de conduite de fluide comportant un dispositif d'équilibrage de la température interne (50).

26. Installation destinée au transport et à la transformation d'un fluide de travail réagissant spontanément de manière exothermique en éléments moulés composés d'un polymère synthétique, d'un dérivé de cellulose ou d'une solution composée de cellulose, d'eau et d'oxyde aminé ainsi que des mélanges de ceux-ci, comprenant un système de conduite de fluide structuré de manière modulaire avec des segments de conduite de fluide, le dispositif d'équilibrage de la température ou des appareils intégrés et des robinetteries, telles que des pompes, des filtres, des échangeurs thermiques, des réacteurs mixtes, des robinets à tournant sphérique, etc., et avec des dispositifs anti-éclatement disposés à intervalles réguliers, **caractérisée en ce que** l'on a prévu au moins un dispositif anti-éclatement qui est réalisé selon l'une quelconque des revendications 1 à 20.

27. Installation selon la revendication 26, **caractérisée en ce que** le rapport spécifique de disposition du dispositif anti-éclatement V est inférieur à 3000.

28. Installation selon la revendication 27, **caractérisée en ce que** le rapport spécifique de disposition du dispositif anti-éclatement V est inférieur à 2000.

29. Installation selon la revendication 28, **caractérisée en ce que** le rapport spécifique de disposition du dispositif anti-éclatement V est inférieur à 1500.

30. Installation selon l'une quelconque des revendications jusqu'à la revendication 29, **caractérisée en ce que** le volume spécifique de compensation de la pression est inférieur à 500 litres.

31. Installation selon la revendication 30, **caractérisée en ce que** le volume spécifique de compensation de la pression est inférieur à 300 litres.

32. Installation selon la revendication 31, **caractérisée en ce que** le volume spécifique de compensation de la pression est inférieur à 150 litres.

33. Installation selon l'une quelconque des revendications 26 à 32, **caractérisée en ce que** le fluide de travail peut être réalisé en tant que fluide de travail à cristallisation, sensible à la chaleur, composé d'une solution à filer contenant de la cellulose, de l'eau et un oxyde aminé tertiaire, par exemple du N-méthylmorpholine-N-oxyde (NMMO), de stabilisateurs pour la stabilisation thermique de la cellulose et du solvant ainsi que, le cas échéant, d'autres additifs tels que le dioxyde de titane, le sulfate de barium, le graphite, les celluloses carboxyméthyliques, le polyéthylèneglycole, la chitine, le chitosane, l'acide alginique, les polysaccharides, les colorants, les produits chimiques à action antibactérienne, les produits ignifuges contenant du phosphore, des halogènes ou de l'azote, des charbons actifs, des suies ou des suies conductrices d'électricité, des acides siliciques, des solvants organiques en tant que diluants, etc.
